Europäisches Patentamt

European Patent Office

Office européen des brevets

(19)

(11) Publication number: 0 343 712
A1

(12) **EUROPEAN PATENT APPLICATION**

(21) Application number: 89201232.9

(51) Int. Cl.⁴: **C23F 11/06**

(22) Date of filing: 17.05.89

(30) Priority: 23.05.88 US 197199
11.01.89 US 295871

(43) Date of publication of application:
29.11.89 Bulletin 89/48

(84) Designated Contracting States:
AT BE CH DE ES FR GB GR IT LI LU NL SE

(71) Applicant: CALGON CORPORATION
Route 60-Campbell's Run Road
Robinson Township Pennsylvania 15205(US)

(72) Inventor: Kohlhofer, John F.
1820 South Canal Drive
Homestead Florida 33035(US)
Inventor: Orban, Martin R.
4362 Gettysburg Court
Hudsonville Michigan 49426(US)

(74) Representative: Hesketh, Alan, Dr.
European Patent Department Merck & Co.,
Inc. Terlings Park Eastwick Road
Harlow Essex, CM20 2QR(GB)

(54) Method for inhibiting corrosion of caustic evaporators via use of catalized hydroquinone.

(57) This invention relates to a method of inhibiting corrosion of caustic evaporators via use of a solution containing catalyzed hydroquinone and pyrogallol wherein said pyrogallol, an oxygen scavenger, serves as a catalyst for said hydroquinone.

EP 0 343 712 A1

OXYGEN SCAVENGING
pH 9 @ 100 DEGREES F

%OXYGEN REMAINING vs MINUTES

— HYDROQUINONE/PYROGALLOL*
········ HYDROQUINONE
······· CATALYZED HYDRAZINE
----- CARBOHYDRAZIDE
— HYDRAZINE

*10:1 RATIO

# METHOD FOR INHIBITING CORROSION OF CAUSTIC EVAPORATIONS VIA USE OF CATALYZED HYDROQUINONE.

## BACKGROUND OF THE INVENTION

This invention relates to a method for inhibiting corrosion of caustic evaporators due to dissolved oxygen which comprises adding to an aqueous caustic slurry feedwater an effective amount of a formulation which contains hydroquinone and pyrogallol, an oxygen scavenger, wherein said pyrogallol serves as a catalyzing agent for said hydroquinone.

The action of dissolved gases such as oxygen and carbon dioxide are the main factors that lead to corrosion of caustic evaporators. Therefore, in order to understand the role of dissolved gases in corrosion, one must understand the electrochemical nature of corrosion.

Under most conditions, there is a tendency for iron to dissolve in water, and two electrons are released for each iron atom that dissolves. The electrons transfer to hydrogen ions present in the water, and the ions are reduced to elemental gaseous hydrogen. All action ceases at this point if hydrogen remains on the surface of the metal due to a protective coating being formed with the passage of electrons. However, any agent which increases the number of hydrogen ions present in the water, or causes the removal of the protective film, serves to increase the rate of corrosion.

The presence of oxygen in caustic evaporators causes a two-fold reaction to occur. Specifically, some oxygen molecules combine with displaced hydrogen, thereby exposing the metal to fresh attack. Other oxygen molecules combine with metal ions to form insoluble metal oxide compounds. With respect to oxygen, the severity of attack will depend on the concentration of dissolved oxygen in the water, water pH and temperature. As water temperature increases, corrosion in feed lines, heaters, boilers, steam and return lines made of iron and steel increases.

The literature discloses numerous references for corrosion protection of caustic evaporators by employing compounds such as hydrazine or a derivative or salt thereof and other commonly known reducing agents. For example; .

U.S. Patent No. 4,282,178 - discloses that the addition of a small amount of hydrazine or a derivative or salt thereof inhibits the corrosive effect of caustic such as sodium hydroxide on metal surfaces during the manufacture of the caustic or in processes using the same.

U.S. Patent No. 3,325,251 discloses a method of reducing oxidative attack on nickel-containing metal surfaces during the dehydration of aqueous caustic solutions which involves the addition of formic acid, oxalic acid, or their sodium or potassium salts, in an amount of 50 to 500 ppm based on the NaOH or KOH content of the solution. However, this patent specifically suggests that larger amounts of the reducing agent may be required when the caustic liquor to be evaporated contains considerable quantities of an oxidizing substance such as a chlorate and/or oxygen.

Several oxygen scavengers are known in the art. Widely used oxygen scavengers include, but are not limited to, sodium sulfite hydrazine, diethylhydroxylamine, carbohydrazide and hydroquinone. U.S. Patent 3,551,349 discloses the use of quinones, particularly hydroquinone, as catalysts for the hydrazine-oxygen reaction. U.S. Patent 4,096,090 discloses the use of hydrazine compounds, a catalytic organometallic complex, and preferable a quinone compound for deoxygenating feedwater. U.S. Patent 3,808,138 discloses the use of cobalt maleic acid hydrazide with hydrazine for oxygen removal. U.S. Patent 3,962,113 discloses the use of organic hydrazine such as monoalkyl hydrazine, dialkyl hydrazine and trialkyl hydrazine as oxygen scavengers.

Carbohydrazide, a derivative of hydrazine, decomposes to form hydrazine and carbon dioxide at temperatures above 360° F. U.S. Patent 4,269,717 discloses the use of carbohydrazide as an oxygen scavenger and metal passivator.

U.S. Patents 4,278,635 and 4,282,111 disclose the use of hydroquinone, among other dihydroxy, diamino and amino hydroxy benzenes, as oxygen scavengers. U.S. Patents 4,279,767 and 4,487,708 disclose the use of hydroquinone and "mu-amines", which are defined as amines which are compatible with hydroquinone. Methoxypropylamine is a preferred mu-amine. U.S. Patent 4,363,734 discloses the use of a catalyzed 1,3-dihydroxy acetone as an oxygen scavenger. U.S. Patent 4,419,327 discloses the use of amine or ammonia neutralized erythrobates as oxygen scavengers. Additionally, diethylhydroxylamine (DEHA) has been used as an oxygen scavenger, and U.S. Patent 4,192,844 discloses the use of methoxypropylamine and hydrazine as a corrosion inhibiting composition. European Patent number 0054356 discloses the use of amino phenol compounds or acid addition salts thereof as oxygen scavengers.

Disadvantages of hydrazine and related compounds include toxicity and carcinogenic effects. Hydrazine is toxic if inhaled, and an irritant to the eyes and skin.

## SUMMARY OF THE INVENTION

The instant invention relates to a method of inhibiting corrosion of caustic evaporators wherein said method comprises adding a formulation containing hydroquinone and pyrogallol, an oxygen scavenger to caustic slurry feedwater wherein said pyrogallol serves as a catalyst for said hydroquinone. Therefore, in accordance with this invention, it has been found that when the formulations described herein are added to weak (28-32% active NaOH) caustic solution feedwater, both components (hydroquinone and pyrogallol) are effective in inhibiting corrosion of caustic evaporators. It has been further found that minimum amounts (as low as 0.5 - 1.5 ppm hydroquinone and 0.055 - 0.165 ppm pyrogallol) of the components of the formulation administered are effective in inhibiting caustic corrosion of evaporators.

Therefore, it is an object of this invention to describe a process wherein hydroquinone is catalyzed by pyrogallol and the resulting product effectively inhibits caustic corrosion of evaporators.

A further object of the invention is to describe concentration levels wherein said hydroquinone in combination with pyrogallol inhibits metal corrosion (preferably nickel) of caustic evaporators.

Another object of the invention is to describe formulations containing hydroquinone and pyrogallol that are non-corrosive due to preventing chemical formation of nitrogen based groups which break down to ammonia, a corrosive substance to multimetal systems.

Further objects will become apparent from the description which follows.

## DESCRIPTION OF THE INVENTION

The invention relates to a method for inhibiting corrosion in caustic evaporators which comprises adding a formulation to an aqueous caustic solution containing hydroquinone, pyrogallol and deionized water (2.5 - 5.0% hydroquinone, 0.55% pyrogallol and 96.95 - 94.45% deionized water by weight of the total formulation), wherein said pyrogallol serves as a catalyst for enhancing the oxygen scavenger activity of hydroquinone.

Both hydroquinone and pyrogallol serve as reducing agents at ratios ranging from 5:1 to 10:1, hydroquinone to pyrogallol and in addition thereto, accelerates oxygen scavenger activity while simultaneously promoting enhanced reducing activity. The reduction reaction reduces hematite (red rust) to magnetite (rush) which limits metallic corrosion, thereby preventing additional rust formation.

The process disclosed herein, generally, involves adding to a weak caustic solution in a feedwater system a formulation containing hydroquinone and pyrogallol in deionized water at ratios ranging from 5:1 to 10:1. As an example of the effectiveness of the process disclosed herein, when an aqueous formulation containing hydroquinone and pyrogallol at a 10:1 ratio (hydroquinone-pyrogallol) is fed into a solution of weak caustic at 0.5-1.5 ppm active hydroquinone (10-30 ppm product), in the first effect of the series of multiple effect evaporators, metal corrosion (nickel) is reduced from 2-3 mpy (without treatment) to 0.3-0.9 mpy via the process disclosed herein.

A study which further exemplifies the concepts of the invention is described below.

## OXYGEN REMOVAL RATE

Rapid reaction with oxygen at low termperatures is an important factor in the performance of a reducing agent.

Figure I, shows the percent of oxygen remaining at pH 9 and 100°F after an eight (8) minute period of time.

The summary of data disclosed in said Figure I, clearly shows the superiority of a formulation containing hydroquinone and pyrogallol to quickly and effectively remove oxygen at 100°F when compared to commonly employed reducing agents.

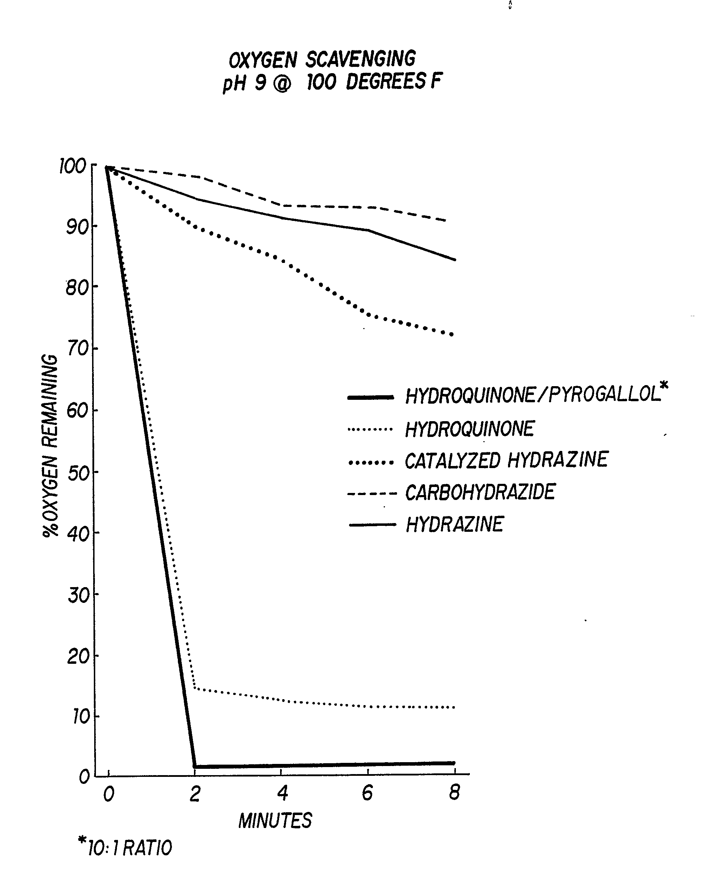

**Claims**

1. A method for inhibiting metal corrosion of caustic evaporators comprising a caustic solution in an aqueous system, said method comprising adding to feedwater of said system a formulation which comprises hydroquinone and pyrogallol at 0.5-1.5 ppm and 0.055-0.165 ppm, respectively.

2. The method of Claim 1, wherein said caustic solution is 28-32% active sodium hydroxide, said metal is selected from the group consisting of nickel, steel and nickel alloys and hydroquinone and pyrogallol is present at 0.5 ppm and 0.055 ppm, respectively.

3. The method of Claim 2, wherein said metal is nickel.

OXYGEN SCAVENGING
pH 9 @ 100 DEGREES F

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 215 655 (CALGON CORP.) * Claims 1-4,6-9; page 10, example 32 * | 1,2 | C 23 F 11/06 |
| Y | CHEMICAL ABSTRACTS, vol. 97, no. 10, 6th September 1982, page 303, abstract no. 77100t, Columbus, Ohio, US; K.J. KIM et al.: "Dihydroxy benzenes as corrosion inhibitors for aluminum sheet in alkali solution", & HAN'GUK PUSIK HAKHOECHI 1982, 11(1), 3-7 * Abstract * | 1,2 | |
| D,A | US-A-3 325 251 (D. VAN DEN AKKER) | | |
| A | US-A-4 585 579 (T.V. BOMMARAYU) | | |
| D,A | GB-A-2 063 237 (VULCAN MATERIALS CO.) & US-A-4 282 178 | | |
| A | CH-A- 337 186 (IMPERIAL CHEMICAL INDUSTRIES) | | TECHNICAL FIELDS SEARCHED (Int. Cl.4) |
| A | WERKSTOFFE UND KORROSION, vol. 21, no. 10, October 1970, pages 795-798; M.N. DESAI et al.: "Inhibierung der Korrosion von Messing 63/37 in Natriumhydroxidlösungen" | | C 23 F 11/00 |

The present search report has been drawn up for all claims

| Place of search | Date of completion of the search | Examiner |
|---|---|---|
| THE HAGUE | 28-08-1989 | TORFS F.M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)